# EUROPEAN PATENT APPLICATION

(11) **EP 2 564 982 A1**
(43) Date of publication of application: **06.03.2013**
(21) Application number: 11179540.7
(22) Date of filing: 31.08.2011
(51) Int. Cl.: B23Q 1/01, B23Q 11/00

(54) **A machining apparatus**

(71) Applicant: Gereedschapswerktuigenindustrie Hembrug B.V., 2031 BJ Haarlem (NL)
(72) Inventor: De Veer, Bert, 5508 CG Veldhoven (NL)
(74) Representative: De Vries & Metman

(57) **Abstract**

A machining apparatus (1) comprises a work piece holder support (7) which is provided with a. work piece holder (8) for holding a work piece and a tool holder support (3) which is provided with a tool holder (2) for holding a tool. The work piece holder (8) an the tool holder (2) are movable with respect to each other for machining a work piece by a tool when the work piece is hold by the work piece holder (8) and the tool is hold by the tool holder (2). The work piece holder support (7) and the tool holder support (3) are resiliently coupled to each other.

## Description

The present invention relates to a machining apparatus, comprising a work piece holder support which is provided with a work piece holder for holding a work piece, and a tool holder support which is provided with a tool holder for holding a tool, wherein the work piece holder and the tool holder are movable with respect to each other for machining a work piece by a tool when the work piece is hold by the work piece holder and the tool is hold by the tool holder.

Such a machining apparatus is known, for example from US 2010/0224039. Nowadays there is a growing need for reducing manufacturing times. As a consequence, moving parts will have increasing accelerations causing higher inertia forces and heavier vibrations in the machining apparatus. This may lead to inaccurate machining of a work piece.

It is an object of the present invention to provide a machining apparatus which allows accurate machining at high speed.

This is achieved by the machining apparatus according to the invention which is characterized in that the work piece holder support and the tool holder support are resiliently or elastically coupled to each other.

Due to this feature the work piece holder support and the tool holder support do not form an integral rigid machine bed. The work piece holder support and the tool holder support are de-coupled via a resiliency, which provides the opportunity to influence the transfer of actual inertia forces between the work piece holder and the tool holder. For example, if a work piece is hold by the work piece holder, and a tool which is hold by the tool holder is oscillated to and from the work piece for machining this, hence generating inertia forces to the tool holder supports, these forces will be transferred to the work piece holder support via a resilient member. This appears to improve the accuracy of machining the work piece dramatically in comparison to prior art machining apparatus in which the work piece holder support and the tool holder support form an integral rigid machine bed. The machining apparatus according to the invention provides the opportunity to operate the machining apparatus at relatively high accelerations of the work piece holder with respect to the work piece holder support and/or the tool holder with respect to the tool holder support while minimizing transfer of undesired forces between the tool holder support and the work piece holder support, hence optimizing accurate machining.

It is noted that the machining apparatus according to the invention may have numerous configuration. For example, it may be used as a. lathe, a milling machine, a drilling machine, a grinding machine or the like.

The work piece holder may be movable with respect to the work piece holder support and/or the tool holder may be movable with respect to the tool holder support. For example, the work piece holder may be rotatable with respect to the piece holder support and the tool holder may be translatable with respect to the tool holder support when the machining apparatus functions as a lathe. Or the work piece holder may have a fixed position with respect to the work piece holder support, whereas the tool holder may be rotatable and translatable with respect to the tool holder support when the machining apparatus functions as a milling apparatus.

More specifically, the work piece holder support may comprise driving means for driving the work piece holder and/or the tool holder support may comprise driving means for driving the tool holder.

In a practical embodiment the work piece holder support and the tool holder support are resiliently coupled to each other through at least a spring, preferably comprising a rubber block. Alternative cushion bearings are conceivable. A typical stiffness or elastic modulus may be about 5N/µm but a higher or lower level is conceivable. The resiliency may also be provided with damping properties, for example a damping of 5-20%.

The tool holder support may comprise a machine frame which supports the work piece holder support. In this case the machine frame may form a bed which can be placed on the floor and on which the work piece holder is mounted through springs.

The work piece holder support and the tool holder support may contact each other in a contact location which lies at a distance from the resilient coupling, and the work piece holder support and the tool holder support may be adapted such that they are displaceable with respect to each other in at least one direction. In this case the contact location may function as a guide for guiding the work piece holder support and the tool holder support with respect to each other. It is noted that in practice the relative displacements will be small, because of the relative high stiffness of the resiliency. A maximum amplitude of the mutual displacement may be up to 500 [µm], but may be higher. The contact location may be formed by a sliding element, but a roller bearing or hydrostatic is also conceivable.

In a preferred embodiment the work piece holder support comprises a work piece holder which is rotatable with respect to the work piece holder support about an axis of rotation and the tool holder is displaceable with respect to the tool holder support substantially parallel to the axis of rotation. The tool holder support may be provided with a linear motor for displacing the tool holder. This provides the opportunity to operate the tool holder at high speed which is necessary in certain machining operations. For example, in case of machining a helical groove in a cylinder which is rotated by the work piece holder, a chisel which is hold by the tool holder can be oscillated at relatively high speed by the linear motor so as to repeatedly removing material of the cylinder at the intended location of the helical groove.

The invention will hereafter be elucidated with reference to the schematic drawings showing an embodiment of the invention by way of example.
Fig. 1 is a perspective view of a part of an embodiment of a machining apparatus according to the invention.
Fig. 2 is a similar view as Fig. 1, where parts of the machining apparatus are removed.
Fig. 3 is a detailed view of a part of the machining apparatus indicated by III in Fig. 2 on a larger scale.
Fig. 4 is an illustrative view of the embodiment as shown in Figs. 1 and 2.

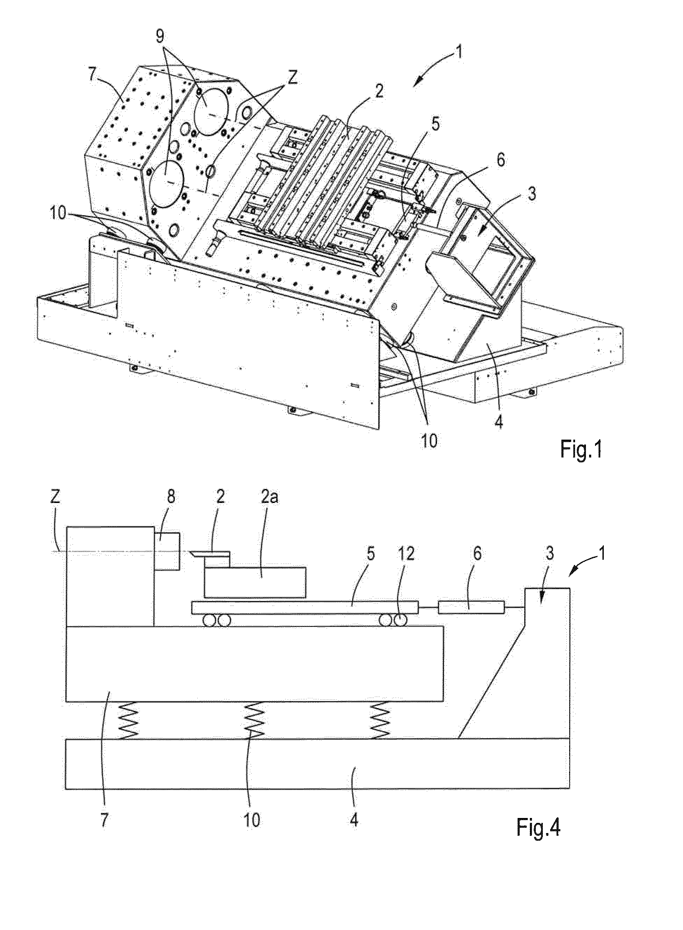

Figs. 1-3 show an embodiment of a machining apparatus 1. according to the invention. For reasons of clarity a lot of parts are not shown in the drawings. Fig. 4 shows the embodiment in a very schematic way in order to illustrate the functioning of the machining apparatus 1.

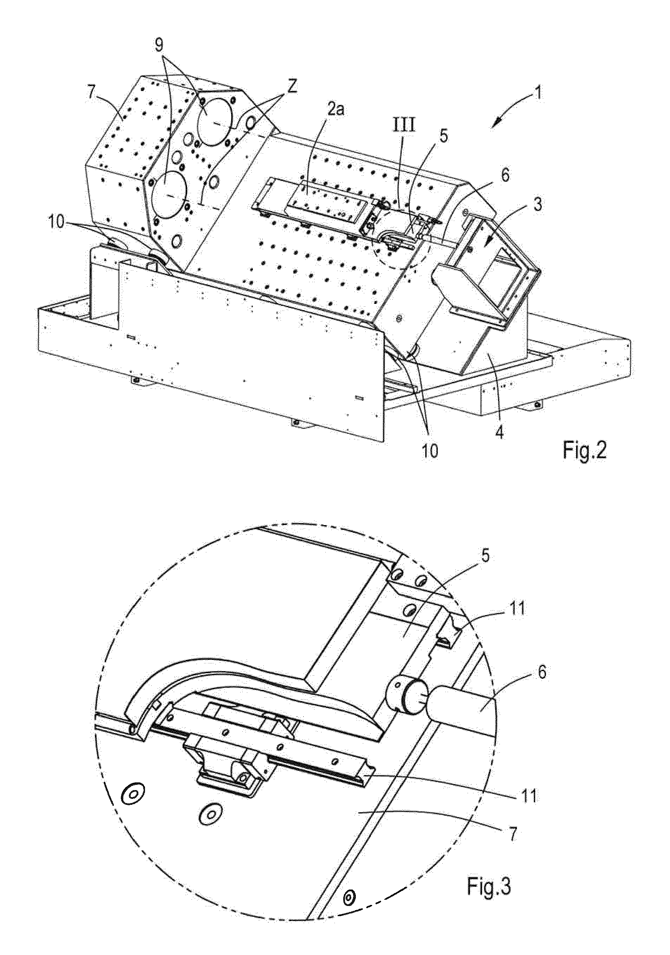

The embodiment of the machining apparatus 1 as shown in the figures comprises a tool holder 2 which is movably mounted to a tool holder support or a force frame 3. The tool holder 2 is only partly shown in Fig. 1, but may be further provided with a chuck or clamps, for example, for clamping a tool such as a chisel. The force frame 3 comprises a. machine frame 4, a base 5 and a rod 6 which couples the base 5 to the machine frame 4. When the machining apparatus 1 is placed in a workshop the machine frame 4 rests on the floor. The base 5 forms a secondary part or magnet block of a linear motor. A primary part or winding block of the linear motor is part of the tool holder 2, and is indicated by reference numeral 2a in Figs. 2 and 4. The linear motor can be controlled such that the tool holder 2 is displaced with respect to the force frame 3 and also with respect to the work piece holder support 7. This means that upon moving the tool holder 2 a reaction force will be exerted on the force frame 3.

The embodiment of the machining apparatus 1 further comprises a work piece holder support 7 which is provided with two work piece holders 8 (only one of them is shown in Fig. 4) in order to be able to change a first work piece of one of the work piece holders 8 while machining a second work piece in the other work piece holder 8. In this embodiment the work piece holders 8 comprise spindles which are mounted in holes or recesses 9 in the work piece holder support 7. The work piece holders 8 are rotatably mounted to the work piece holder support 7 and are rotatable with respect to the work piece holder support 7 about axes of rotation Z which extend parallel to each other. In an alternative embodiment the axes of rotation Z may have different directions.

The tool holder 2 is displaceable with respect to the force frame 3 substantially parallel to the axes of rotation Z. In this case the tool holder 2 is also displaceable in transverse direction with respect to the axes of rotation Z. In an alternative embodiment the tool holder 2 may be displaced in a direction which is angled with respect to the axes of rotation Z, for example the tool holder 2 may be dynamically translated along an axis which is angled at 45 degrees with respect to the axes of rotation Z. The work piece holder support 7 is a rigid element, which is made of granite or an alternative solid material. The work piece holder support 7 rests on the machine frame 4 through cushion bearings 10, which may be made of rubber blocks or alternative springs. This means that the work piece holder support 7 and the force frame 3 are resiliently coupled to each other.

The machining apparatus 1 is suitable for machining a work piece by a tool since the work piece holder 8 and the tool holder 2 are movable with respect to each other when the work piece is hold by the work piece holder 8 and the tool is hold by the tool holder 2. The embodiment as shown in Figs. 1-4 may be used as a lathe. For example, the work piece holders 8 comprises spindles which can rotate a work piece, and the tool holder 2 may be provided with a chisel which is displaced in a direction parallel to the axes of rotation Z. For certain work pieces it may be necessary to move the chisel in an oscillating manner parallel to the axes of rotation Z. Due to repeated accelerations of the too holder 2 including the primary part 2a of the linear motor inertia forces will be exerted on the force frame 3. Due to the cushion bearings 10 the resulting vibrations are not directly transferred to the work piece holder support 7, but due to the presence of the cushion bearings the vibrations may be transferred to the work piece holder support 7 at a reduced amplitude. In practice, the machine apparatus 1 including the springs 10 will be designed in such a way that the majority of the forces will be transferred through the machine frame 4 into the shop floor.

Fig. 3 shows in detail that base 5 of the force frame 3 is slidably mounted to the work piece holder support 7 by guide rails 11. It is noted that for illustrative reasons this is indicated by wheels 12 in Fig. 4. The guide rails 11 form a contact location between the work piece holder support 7 and the force frame 3 which lies at a distance from the cushion bearings 10. This creates a more stable structure, but still allows the work piece holder support 7 and the force frame 3 to displace with respect to each other in a direction parallel to the axes of rotation Z. In an alternative embodiment the guide rails 11 may be eliminated such that the work piece holder support 7 and the base 5 are spaced from each other. The connecting pin 6 is stiff in the driving direction of the linear motor which extends parallel to the axes of rotation Z in this case; in other directions it has reduced stiffness in order to allow the work piece holder support 7 to move relatively to machine frame 4.

The embodiment as shown in the figures and described hereinbefore provides a machining apparatus 1 in which under operating conditions inertia forces of the tool holder 2 in operating direction of the linear motor along axes Z are guided to the force frame 3. The tool holder 2 is slidably mounted to the work piece holder support 7 such that the tool holder 2 in fact has only one degree of freedom in a direction parallel to the axes of rotation Z. If the tool holder 2 would be reciprocatingly moved in a direction transversely to the axes of rotation Z the resulting inertia forces would be transferred directly to the work piece holder supports 7. This could be changed in an alternative embodiment in which at least still another linear motor is present in order to create an oscillating movement of the tool holder 2 in a direction transversely to the axes of rotation Z, and in which the inertia forces are transferred to the force frame 4, as well.

The invention is not limited to the embodiment shown in the drawings and described hereinbefore, which may be varied in different manners within the scope of the claims. It is conceivable that the tool holder is mounted to the work piece holder support and the work piece holder is mounted to the force frame. It is also possible that the work piece holder has a fixed position with respect to the work piece holder support and the tool holder is rotatable and translatable with respect to the force frame in order to create a milling or grinding function of the machining apparatus. Furthermore, the linear motor may be replaced by alternative driving means which is able to generate a reciprocating movement of the tool holder.

The concept of decoupling forces is not limited to single slide units. It is, for example, possible that in a stacked configuration the connecting rod 6 is not fixed directly to the machine frame 4 but through a separate guiding, parallel to a first axis in the stack of slides.

## Claims

1. A machining apparatus (1), comprising a work piece holder support (7) which is provided with a work piece holder (8) for holding a work piece, a tool holder support (3) which is provided with a tool holder (2) for holding a tool, the work piece holder (8) and the tool holder (2) being movable with respect to each other for machining a work piece by a tool when the work piece is hold by the work piece holder (8) and the tool is hold by the tool holder (2), **characterized in that** the work piece holder support (7) and the tool holder support (3) are resiliently coupled to each other.

2. A machining apparatus (1) according to claim 1, wherein the work piece holder (8) is movable with respect to the work piece holder support (7) and/or the tool holder (2) is movable with respect to the tool holder support (3).

3. A machining apparatus (1) according to claim 1 or 2, wherein the work piece holder support (7) comprises driving means for driving the work piece holder (8) and/or the tool holder support (3) comprises driving means for driving the tool holder (2).

4. A machining apparatus (1) according to one of the preceding claims, wherein the work piece holder supports (7) and the tool holder support (3) are resiliently coupled to each other through at least a spring (10), preferably comprising a rubber block.

5. A machining apparatus (1) according to one of the preceding claims, wherein the tool holder support (3) comprises a machine frame (4) which supports the work piece holder support (7).

6. A machining apparatus (1) according to one of the preceding claims, wherein the work piece holder support (7) and the tool holder support (3) contact each other in a contact location (11) which lies at a distance from the resilient coupling (10), wherein the work piece holder support (7) and the tool holder support (3) are adapted such that they are displaceable with respect to each other in at least one direction (Z).

7. A machining apparatus (1) according to claim 6, wherein the contact location is formed by a. sliding element (11) for guiding the work piece holder support (7) and the tool holder support (3) with respect to each other.

8. A machining apparatus (1) according to one of the preceding claims, wherein the work piece holder support (7) comprises a work pierce holder (8) which is rotatable with respect to the work piece holder support (7) about an axis of rotation (Z) and wherein the tool holder (2) is displaceable with respect to the tool holder support (3) substantially parallel to the axis of rotation (Z).

9. A machining apparatus (1) according to claim 8, wherein the tool holder support (3) is provided with a linear motor for displacing the tool holder (2).

10. A machining apparatus (1) according to claim 9, wherein the tool holder (2) is slidably mounted to the work piece holder support (7) such that the tool holder can be driven at least parallel to the axis of rotation (Z)_{,}
